(19)

Europäisches
Patentamt

European
Patent Office

Office européen
des brevets

(11) **EP 4 455 808 A1**

(12) **EUROPEAN PATENT APPLICATION**

(43) Date of publication:
**30.10.2024 Bulletin 2024/44**

(51) International Patent Classification (IPC):
**G05B 19/18** *(2006.01)* **G05B 19/404** *(2006.01)*

(21) Application number: **23170517.9**

(22) Date of filing: **28.04.2023**

(52) Cooperative Patent Classification (CPC):
**B23H 1/00; B23H 7/20; B23H 9/006;**
**G05B 19/4065;** G05B 19/4097; G05B 2219/35288;
G05B 2219/45221

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **GF Machining Solutions SA**
**1217 Meyrin 1 (CH)**

(72) Inventor: **Pereira, Luis**
**1273 Arzier (CH)**

(74) Representative: **Li Schrag, Yue**
**Georg Fischer AG**
**Amsler-Laffon-Strasse 9**
**8201 Schaffhausen (CH)**

(54) **A METHOD AND A DEVICE FOR OPTIMIZATION OF DIE-SINKING ELECTRICAL DISCHARGE MACHINING**

(57) The present invention is related to a method for optimization of electrical discharge machining process for eroding a workpiece by an electrode mounted in an electrical discharge machine tool, wherein a plurality of electrodes are required to form a plurality of cavities on the workpiece. The method comprises the steps of:

g. defining a target related to a machining priority, in particular the machining priority is selected from a group including machining quality and machining time, ,

h. obtaining cavity specification data defining the geometry of the cavity and the number of the cavities for calculating the material volume to be removed from the workpiece to form the cavities by a processing unit;

i. obtaining at least one machining setting including machining parameters applied for machining the cavities by the processing unit;

j. defining at least one machining sequence describing the order of machining the plurality of cavities;

k. calculating cumulative wear of the electrode caused by machining the cavities based on the obtained cavity specification data, the obtained machining setting and the defined machining sequence by the processing unit; and

l. determining the number of the electrodes required for machining the plurality of cavities based on the calculated cumulative wear of the electrode to reach the target by the processing unit.

Fig. 2

EP 4 455 808 A1

**Description**

**FIELD OF THE INVENTION**

The present invention is related to a method for optimization of die-sinking electrical discharge machining, in particular by calculating in advance the number of electrodes required for machining. In further, the present invention is related to a method for optimizing the machining sequence related to this number of electrodes.

**BACKGROUND OF INVENTION**

The die-sinking electrical discharge machining is a process applicable to machine hard materials. The die-sinking electrical discharge machine tools are widely known for the production of molds, complex shaped cavities, and applications, which are very difficult to machine with conventional machining processes.

However, a disadvantage of such process is that die-sinking process is comparably slow. In order to enhance the production efficiency, automation plays a key role. Therefore, like many other types of machine tools, the electrical discharge machine tool is typically equipped with some automation algorithmic to optimize the process.

Typically, several shaped electrodes for one part production are required to obtain the desired cavities. Additionally, the machining process for manufacturing one part comprises different machining phases, such as roughing, semi-finishing and finishing in order to achieve high surface quality. Usually, different electrode categories are used for different machining phases. In addition, one electrode for one machining phase is in most of applications insufficient. Thus, multiple electrodes having the same shape may be required for one machining phase.

US 6521 856 discloses a method and a device for controlling multiple machining processes in a die-sinking erosion machine with several identical or different electrodes. The machining sequence of the machining processes are automatically determined based on the predefined criteria inputted by the user. In this method, the number of electrodes used is predefined and the machining sequence is optimized based on the predefined number of tool electrode.

However, for multi-cavity machining process the number of electrodes used in the machining process plays also an important role in consideration of production quality and costs. Multi-cavity machining in die-sinking EDM presents challenges in terms of reliance on expert know how for the selection of the number of electrodes and the sequence of these electrodes used in order to achieve not only the required geometry but also the surface quality. Electrical Discharge Machining (EDM) uses electrical discharges to removal material from the workpiece. As a result of this, some material is also removed from the tool electrode, which is called "electrode wear". This is a disadvantage of the EDM process. In order to reduce the negative impact on the part quality, the electrode with high wear caused by machining can be replaced by a new electrode. However, this increases not only machining time for changing the electrode but also the machining costs. Thus, there is a demand for further optimization of this parameter, namely the number of tool electrode required for machining a part.

Until now, the operator, especially based on his experience, mainly determines the number of the tool electrode. Thus, determining this parameter depends strongly on the expertise of the operator and the experimental tests, which provide limited optimization possibilities due to the high number of options in such system. Moreover, in order to ensure the quality of the machined part, a security margin is usually added. This leads sometimes waste of tool electrodes and consequently causes undue costs.

**SUMMARY OF THE INVENTION**

It is an objective of this invention to provide a method for optimization of electrical discharge machining process with an improved productivity. In further, it is an objective of this invention to provide an optimized method for calculating the number of electrodes of electrical discharge machining process. In particular, it is an objective to provide a method for optimization of electrical discharge machining process with reduced production costs. Moreover, it is an objective of this invention to provide a device applied for improving the productivity of the electrical discharge machining process.

According to the present invention, these objectives are achieved through the features of independent claims. In addition, further advantageous embodiments follow from the dependent claims and the description.

To achieve the above objectives, the present invention provides a method for optimization of electrical discharge machining process for eroding a workpiece by an electrode mounted in an electrical discharge machine tool, wherein a plurality of electrodes are required to form a plurality of cavities on the workpiece comprising the steps of: defining a target related to a machining priority, in particular, the machining priority is selected from a group including machining quality, machining time, and machining costs; obtaining cavity specification data defining the geometry of the cavity and the number of the cavities for calculating the material volume to be removed from the workpiece to form the cavities by a processing unit; obtaining at least one machining setting including machining parameters applied for machining the cavities by the processing unit; defining at least one machining sequence describing the order of machining the cavities;

calculating cumulative wear of the electrode caused by machining the cavities based on the acquired cavity specification data, the machining sequence and the machining setting by the processing unit; and determining the number of the electrodes required for machining the plurality of cavities based on the calculated cumulative wear of the electrode to reach the target by the processing unit.

Typically, EDM machining process requires at least two machining phases including roughing, and finishing to achieve a reasonable quality. In case of shapes must be machined several times, namely multi-cavities, at least three machining phases including roughing, semi-finishing and finishing are needed. To be complete, current systems can manage up to five machining phases including roughing, three phases of semi-finishing and finishing. The geometry of the electrode is defined from the geometry of the cavity. Thus, all electrodes used in different machining phases have the quite similar geometry, but not the exactly same geometry due to different undersize specification. However, the type of electrodes can vary for machining the cavity in different machining phases to reach different goals. Within the same machining phase, the electrode having the same geometry is applied, but the number of electrodes is to be determined. Moreover, the number of the electrodes for different machining phases can vary as well. For example, in roughing, the most volume of material is removed but a high surface roughness is required, while in finishing, the least volume of material is removed, but a low surface roughness is required. Therefore, it is difficult to estimate the number of electrodes needed manually. A method for computing this number by the processing unit can provide an optimum result. This can improve the machining sufficiency and save costs.

Preferably, for each machining phase the number of electrode required is determined. For roughing, a first type of electrode is applied. Thus, the number of the first type of electrode is determined. For semi-finishing, a second type of electrode is applied. Thus, the number of the second type of electrode is determined. For finishing, a third type of electrode is applied. Thus, the number of the third type of electrode is determined.

Before starting the machining, a machining preparation phase is needed. In this phase, the material of the workpiece is selected and the shape of the cavities to be formed on the workpiece are designed. From the cavity to be machined, the shape of the electrode is defined and designed and the material of the electrode is selected. The cavity geometry is normally designed by using a Computer Aided Design (CAD) program and presented as a 3-D model. From this model, cavity specification data can be derived. Preferably, the cavity specification data is automatically derived by the process unit. The processing unit is a computer arranged outside of the machine tool. Alternatively, the processing unit is integrated in the machine tool.

As in many machining process, it is difficult to fulfill all the requirements. Thus, target can be defined by selecting the priority criteria from the group including machining quality and/or machining time, and/or machining costs. The machining quality mainly concerns the quality of the produced part and is dependent on the machining wear. The machining quality includes for example, the roughness of the produced part and precision of the shape of the machined cavity. Normally, a desired roughness can be given by the users. The machining costs includes for example the material costs of the electrodes, which has a direct dependency on the number of electrodes. The number of electrode must be determined to reach the target. By selecting the priority criterion, the system generates the machining settings applied for machining. For example, if the machining speed is selected as the priority, this automatically implies a higher electrode wear. For example, for a defined roughness selected as the target, the number of electrodes is calculated in a way such that the machined part can reach this roughness. The target is manually input into the processing unit by an operator. Then the processing unit creates the machining program.

In further, the machining parameters may vary even during the same machining phase to obtain an optimal machining condition. Thus, different machining settings including machining parameters are defined. Each machining setting includes a different set of machining parameters, machining one cavity may require one or more machining settings. Typically, electrical signals applied for machining consist of a train of applied rectangular or sinusoidal electrical pulses, and the essential parameters defining the pulses are the delay time between each pulse, the duration of the pulse, and the applied current. These parameters plus the voltage between the electrode and the workpiece are the parameters that mainly influence the wear of the electrode and therefore included in the machining settings.

Machining sequence defines in which order the cavities should be machined. Typically, the cavities are machined sequentially. For example, if a number of N cavities are to be formed on the workpiece. In an ascending machining order, the cavities are machined from cavity 1 to N. In a descending machining order, the cavities are machined from the cavity N to 1. However, it is also possible to machine the cavities in a non-sequential order. For example, the cavities can be ranked based on defined criteria. The order of the machining is defined according to the ranking of the cavities. One machining step indicates one loop of the machining process, in which all the cavities from 1 to N or from N to 1 are machined.

In the preparation phase, a machining program is generated and this machining program contains all data for machining one or multiple cavities with different shapes. Each different shape can be machined several times. Machining one cavity several times is known as multi-cavities machining. The machining program is for example a CAM program. All necessary information required to calculate the number of the electrode can be extracted from the machining program by the processing unit and use this information as an input for the calculation, such as cavity specification data, machining sequence, machining setting. However, it is not excluded to input the entire or a part of this information by operator. For example, the machining sequence can be selected from several predefined machining sequences by the operator.

In order to be able to machine the workpiece, the number of electrodes required and the machining sequences must be specified as well. The method of the present invention provides a method for automatically calculate the volume of material removed by each machining setting and the wear of each machining setting on the electrodes in order to provide an optimal number of electrodes. Therefore, the maximum productivity for achieving the required part specifications can be achieved. Additionally, this method has the advantage of minimizing the costs related to electrodes and carbon foot-print related to electrode materials and energy consumption associated with this manufacturing process.

Based on the method according to present invention a software tool can be provided to allow operators to determine the optimum number of tool electrodes required to machine the defined number of cavities at the preparation stage by a fully automated process.

One important factor influencing the number of electrodes is the wear of the electrode caused by machining, in particular the cumulative wear of the electrode caused by machining multiple cavities. The cumulative wear is determined by the steps of: calculating the linear wear of electrode for machining one cavity; and calculating the cumulative wear by summing up the calculated linear wear of the electrode caused by machining multiple cavities, which are machined by the same electrode. For example, the total number of cavities to be machined is N and the machining sequence of the cavity is the ascending order, namely in the order of 1, 2 ... N-1 and N. In a first step, the linear wear of the electrode caused by machining one single cavity is calculated. The linear wear calculation is conducted for each of N cavities. In a second step, the cumulative wear of electrode caused by machining multiple cavities is calculated. The cumulative wear of electrode for machining the first cavity is equal to the linear wear of the electrode caused by machining the first cavity. The cumulative wear of electrode for machining the second cavity is the sum of the linear wear of electrode caused by machining the first cavity and the linear wear of electrode caused by machining the second cavity. The cumulative wear of electrode for machining the last cavity N is the sum of the linear wear of the electrode caused by machining the cavity with the number of N and the cumulative wear of the electrode caused by machining the cavity with the number of N-1.

In one variant, a plurality of machining settings are defined for machining one cavity in one machining phase, and the wear of the electrode for one cavity is calculated by considering one or more machining settings. Each machining phase may include one or more machining steps. In each machining step, one or more machining settings may be applied for machining the cavities, in particular, all cavities are machined by the same machining settings within one machining step.

If more than one machining settings are applied for machining. The machining of one cavity is conducted in a setting-by-setting manner. This means, first cavity is machined by applying the different machining settings one after another, then the second cavity is machined again by applying the machining settings one after another. Thus, the linear wear of electrode caused by machining each cavity must be calculated by considering all the machining settings.

The linear wear WLseq of the electrode is calculated setting-by-setting and by taking into account the volume of the part to be removed. The calculation is as follows:

Volumetric wear by setting WVs [mm$^3$] can be calculated by using the formula:

$$WVs = Kws \times VRs \text{ (Kws is the electrode wear rate (by setting) [\%] and VRs is the volume removal of the setting [mm}^3\text{])}$$

Linear wear by setting WLs [mm] can be calculated by using the formula:

$$WLs = WVs/Spr \text{ (Spr is projected frontal surface [mm}^2\text{])}$$

If one machining phase includes multiple machining settings, then the linear wear of one cavity is the sum of the linear wear of each machining setting for this cavity, namely:

$$WLseq = \sum_{setting=1}^{n} WLs$$

The cumulative wear (TWc) is the sum of the wear of electrode caused by machining multiple cavities.

The cumulative wear is representative of the geometry error on each cavity. When the cumulative wear exceeds a set limit, it means that the required cavity depth is not reached into admissible deviation. Therefore, all cavities must be machined once more but with a new electrode, since the previous electrode is used up. The calculation steps including the calculation of cumulative wear are repeated for all cavities with the new electrode. If the cumulative wear for one cavity still exceeds the limit value, the number of the electrode must be increased again, because a further new electrode must be applied. This iteration must be conducted until the cumulative wear of all cavities is below the limit value.

The limit value can be determined based on the target related to the machining priority. It is accepted that if we choose to work with a speed priority, it is logical to have a higher limit value than if we choose a low-wear priority because this means that we are not looking for the same final precision.

In relation to this, a speed priority will result in lower costs, as fewer electrodes will be needed to manufacture and a shorter machining time.

The calculation process is able to calculate the number of electrodes for all the combination of machining priorities in way to propose to the user the preferred and/or range of preferred variants

In one variant, a high limit value and a low limit value are defined. High limit value means that the wear of the electrode becomes too important and it can generate too many deformations to be compensated with next electrode and machining step amplifying its own deformation. If the high limit is exceeded, then a new electrode must be applied immediately for the machining of next cavity even within one machining step. It means, the number of electrode must be increased and the calculation of the cumulative wear of electrode for the next cavity should be conducted by considering applying a new electrode.

If only the low limit is exceeded, the current electrode can still be utilized until the end of the current machining step. A new electrode should be applied for the next machining step. Especially, the low limit value and the high limit value are defined based on the material of the workpiece, and/or machining settings, and/or machining sequence.

If the cumulative wear of the cavity exceeds the limit, the number of the electrode is increased.

If the cumulative wear of one cavity exceed the high limit, the number of electrode is increased before calculating the wear of the next cavity. This means, a new electrode should be immediately applied for the next cavity since the wear is too high.

When the last machining phase is completed and the cumulative wear of all cavities is below the limit, then the current number of electrode is the final result.

Based on this calculation, it is possible to determine when the electrode has to be changed and how far a machining can be conducted by each electrode.

In a preferred variant, the method further comprises obtaining data defining machining phases and for each machining phase the number of electrodes required is determined, wherein the machining phase is one or more of the following: roughing, semi-finishing and finishing.

In a preferred variant, the machining time is determined based on the calculated cumulative wear. The calculated machining time for the first cavity is the reference machining time because it is the only cavity that starts with the full material to be removed and new electrode. The material to be removed for all the other cavities is less because of the wear on the electrode. In particular, a start point and an end point of the machining is determined. The start point and the end point are referred to a temporal point of the machining or a positioning point on the machining path. This allows knowing which settings are impacted by the wear and work completely or partially or not at all. For each cavity, this makes it possible to compare the amount of material remaining to be removed with respect to the reference, and, by extension, the machining time required. The sum of all the times per cavity allows calculating machining time for roughing; semi-finishing(s); finishing and the sum of these times gives the total machining time.

Advantageously, the determined number of electrodes is transmitted to a machining process to prepare the electrodes needed. In general, the electrodes are machined by machine tools, for example by milling. If the number of tool electrodes can be directly transmitted to the milling machine, the exact number of tool electrodes can be produced. This further improves the automation of machining and can optimize the material costs.

A method for machining a part by EDM comprising the steps of: designing cavities and the electrode using a CAD by a first processing unit; calculating the number of electrode by a second processing unit; receiving the calculated number of electrodes by a third processing unit; machining the electrodes by a first machine tool; and machining the part by the electrodes by a second machine tool. The first machine tool is a machine tool for milling the electrode. The second machine tool is an EDM machine tool.

In the present invention, a system for machining a part by EDM is provided. The system comprises a first processing unit, a second processing unit, a third processing unit, a first machine tool and a second machine tool. The first processing unit is configured to design cavities and the electrodes using a CAD. The second processing unit is configured to calculate the number of the electrode. The third processing unit is configured to receive the calculated number of electrodes. A first machine tool is configured to machine the electrodes. The second machine tool is configured to machine the part by applying the electrodes.

Preferably, the first processing unit, the second processing unit and the third processing unit are a computer or a control unit of a machine tool. They can be an external device or integrated in the machine tool.

In a preferred variant, the first machine tool is a milling machine tool and the second machine tool is an EDM machine tool.

**BRIEF DESCRIPTION OF THE DRAWINGS**

In the following, a more particular description of the present invention is further described. The embodiments are described and explained with details with reference to accompanying drawings in which

Fig.1 illustrates a workpiece with multiple cavities;

Fig.2 illustrates a flow chart of the method;

Fig.3 illustrates a schematic view of first example of machining sequence;

Fig. 4a, 4b illustrate the calculation of number of electrode for the first example of machining sequence;

Fig.5 illustrates a schematic view of a second example of machining sequence;

Fig.6a, 6b illustrate the calculation of number of electrode for the second example of machining sequence;

Fig.7 illustrates the curves of limitation values;

**EXEMPLARY EMBODIMENTS**

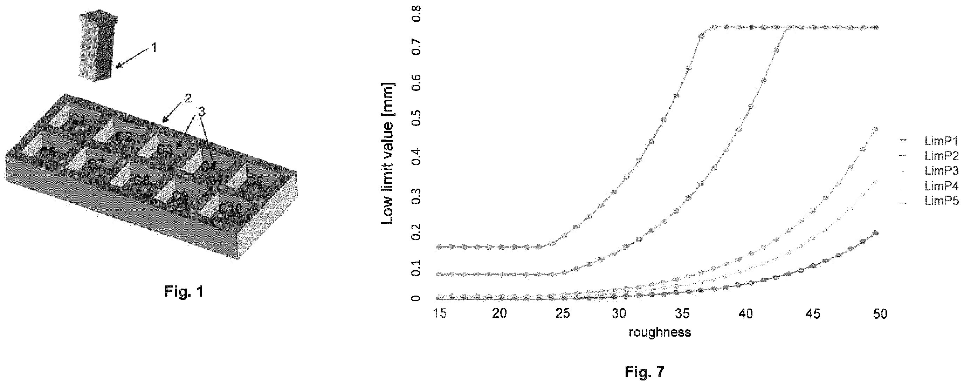

Figure 1 shows a model of a final part 2 with ten cavities indicated by the symbols C1 to C10. All cavities have the same geometry. The geometry of the cavity depicted in figure 1 is simplified and should not be understood as a limitation of the applicability of the method. The method of the present invention is applicable for machining any shape of the cavity. One electrode 1 required to form the cavities is also shown here. The model specification data can be extracted from the model.

In this example, machining all cavities requires three machining phases including roughing, semi-finishing and finishing. In each machining phase, the machining process is divided into several machining steps. In each machining step, all cavities are machined sequentially based on the selected machining sequence by one electrode by applying one or more machining settings, for example from cavity 1 to cavity 10 or from cavity 10 to cavity 1. In each machining step, a new electrode is applied. The number of the electrode defines the number of the machining step.

For machining, a workpiece is mounted on a pallet that is clamped on a table of the machine tool, which is not shown in the figures. The method of the present invention is applicable for any die-sinking EDM machine.

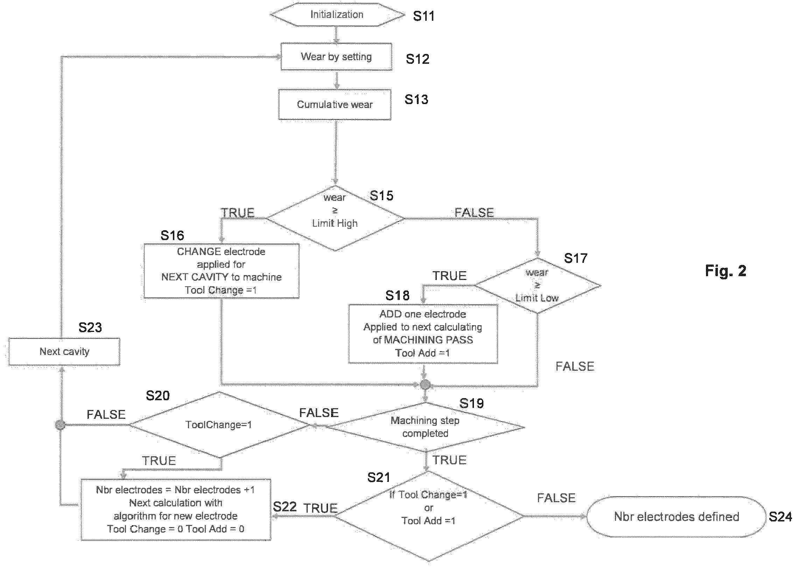

Figure 2 shows a flow chart of calculating the number of electrode needed for one machining step. In a first step S11, the method is started. The following steps are conducted for each cavity to be machined within this machining step. For clarity, the steps are explained in one example, in which ten cavities must be machined and the machining sequence is defined in the ascending order, namely from cavity 1 to cavity 10. In a step S12, the linear wear of the electrode for one cavity is calculated by applying the machining setting, e.g. the $5^{th}$ cavity C5. In a step S13, the cumulative wear of the electrode is calculated, for example, the cumulative wear of electrode for cavity C5 is calculated by summing up the linear wear of electrode for machining the previous four cavities C1 to C5. In a step S15, the cumulative wear of the cavity is compared with a high limit value. If the cumulative wear of the cavity is larger than the high limit value or is equal to the high limit value, the method continues with a step S16. If the cumulative wear of the cavity is smaller the high limit value, the method continues with a step S17. In the step S16, a parameter "Tool Change" is set to 1, because the electrode must be changed for machining the next cavity due to the too high electrode wear, for example, if the cumulative wear of the cavity C5 is larger than the high limit value, the electrode must be changed for machining the cavity C6. The parameter "Tool Change" is applied to temporally store the information that the tool electrode should be changed for machining the next cavity. In a step S17, the determined cumulative wear is compared with a low limit value. If the cumulative wear of the cavity, for example, cavity C5 is larger than the low limit or equal to the low limit, the method continues with a step S18. If the cumulative wear of the cavity, e.g. C5 is smaller than the low limit value, the method continues with a step S19. In the step S18, a parameter "Tool Add" is set to 1, because one electrode should be added after the end of this machining step, for example, if the cumulative wear of the cavity C5 is higher than the low limit value, a new electrode should be added after the machining of the last cavity of the machining phase, namely C10. The parameter "Tool Add" is applied to temporally store the information that the tool electrode should be changed for the next machining step. In the step S19, it is verified if the current machining step is completed. For example, if the current cavity is C5, than the machining step has not been completed yet. If the current machining step is not completed, the method continues with a step S20, in which the value of the parameter "Tool Change" is checked. If this value is 1, a step S22 is conducted. If this value is zero, a step S23 is conducted. In the step S22, the number of the tool electrode is increased by 1 and the both parameters "Tool Change" and "Tool Add" are reset to zero. If the machining step is completed, for example, the current cavity is the last cavity of the current machining step C10, a step S21 is conducted. In this step, it is verified if the cumulative wear of all cavities is lower than the high limit value and lower than the low limit value. If it is true, the number of electrode currently determined is the final result of this machining step as shown in step S24. If the cumulative wear of one cavity is higher than the high limit value, namely the parameter "Tool Change" is 1, or if the cumulative wear of one cavity is lower than the high limit value but higher than the low limit value, namely if the parameter Tool Add is 1, the step S22 is conducted. The S23 indicates that the calculation loop including the steps S12, S13, S14, S15, S16, S17, S18, S19, S20, S21, S22 are for next cavity should be conducted.

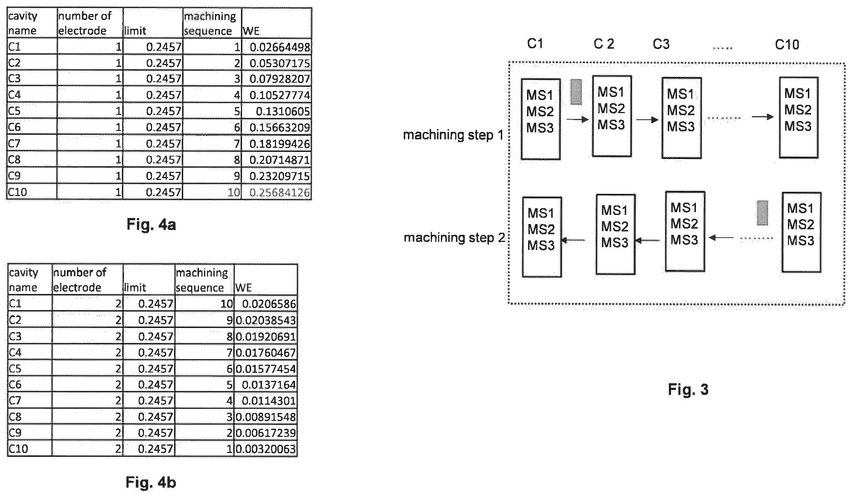

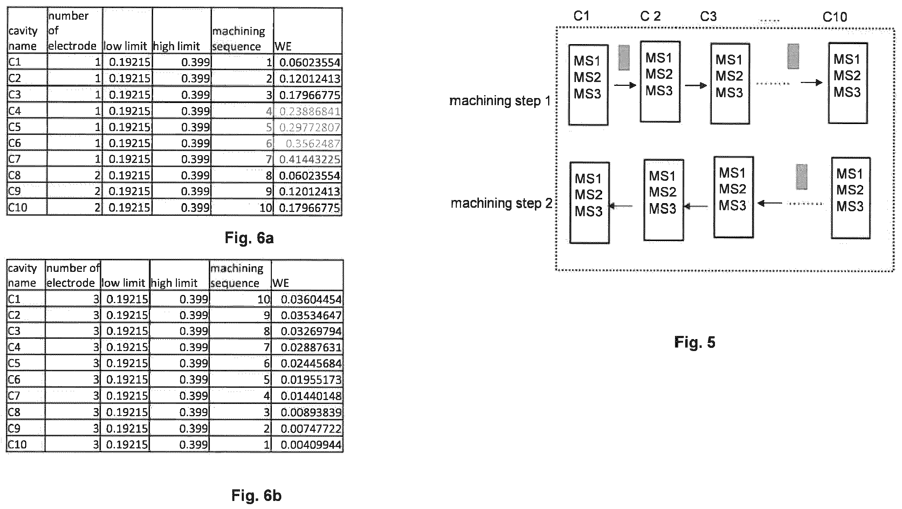

If the cumulative wear of one cavity is higher than the high limit and this cavity is not the last cavity of the current machining step, for example the cavity C7 shown in figure 6a, the steps S16, S19, S20 and S22 are conducted. If the cavity is the last cavity and the cumulative wear of this cavity is higher than the high limit, the steps S16, S19, S21 and S22 are conducted. If the cumulative wear one cavity is lower than the high limit value but higher than the low limit value, for example the cavity C10 shown in figure 4a, the steps S18, S19, S21 and S22 are conducted. Figures 4a and 4b illustrate one embodiment of the calculation of number of electrodes. In this example, the number of the electrode required for the first machining phase, namely roughing is determined. In additional, a so-called "alternated full" machining sequence is selected. It means that in the first machining step the cavity is machined in the ascending order from cavity C1 to C10. In the second machining step, the ten cavities is machined in the descending order from cavity C10 to C1. The machining sequence is shown in the column of machining sequence. The column "WE" shows the calculated cumulated wear of tool electrode, which is compared with the limit. The calculation starts with the assumption of using one electrode to machine ten cavities. As it can be seen, the cumulative wear of the last cavity C10 is larger than the limit. This means, using one electrode is not sufficient to achieve the required performance. Consequently, a second electrode must be added. Thus, the number of electrode has been increased from 1 to 2. The calculation of cumulative wear is repeated based on the assumption that a new electrode is applied. The calculation result is shown in the figure 4b. The remaining volume of material to be removed in the machining step 2 is different than for the machining step 1, since a part of material has already been removed in the machining step 1. The machining step 1 starts with the full material. The remaining volume of material to be removed in the machining step 1 depends on the cumulative wear calculated in the machining step 1. It can be seen that all cumulative wear are below the limit after the second machining step. This means, no additional electrode is needed and the calculation loop can be stopped. Finally, the number of the electrode needed to machine the first phase, namely roughing is two. Two electrodes are sufficient to achieve the required performance.

Figure 3 shows an illustration of the first machining phase, namely roughing. As outline above, two machining steps are needed, since the final result of the determined number of electrode is two. In this machining phase, three machining settings indicated by symbols MS1, MS2 and MS3 are applied. Each cavity should be machined setting-by-setting. For example, in the first machining step, the first electrode is applied. The first cavity is machined by applying three setting one after another. Then, the second cavity is machined again by applying three settings one after another. The machining continues in this order until all 10 cavities are machined by the first electrode. If a second machining step is required, the first electrode is replaced by a second electrode after finishing the cavity 10 in the first machining step. The machining starts with cavity 10 by applying all three machining settings, and continues with the cavity 9 by applying all three machining settings. In this example, the same machining settings are applied for the first machining step and the second machining step. However, it is not excluded to change the machining settings in the second machining step.

Figures 6a, 6b show another embodiment, in which a high limit and a low limit are predefined. If the cumulative wear exceeds the high limit value, a new electrode is introduced immediately for machining the next cavity instead of at the end of one machining step. As shown in figure 6a, the cumulative wear for cavity C7 exceeds the high limit, thus, a new electrode is required for machining the next cavity C8. Additionally, after the first machining step, a further new electrode is applied to ensure the surface quality. The calculation is repeated again. As shown in figure 6b, the cumulative wear of all cavities is below the both limits. Therefore, no further electrode must be added. The calculation loop can be stopped. Finally, the calculated number of electrode required in this example is three. However, it is possible to continue the machining with the second electrode in the second machining step.

Figure 5 shows the machining process of this example. The same machining sequence shown in figures 4a, 4b and 3 is applied in this example. In the first machining step, the machining starts with a first electrode for machining the cavities C1 to C7. After the machining of cavity C7, a second electrode is applied for machining the cavities C8 to C10. In the second machining step, machining starts with a third electrode.

Figure 7 shows several curves of the low limit value in dependency of the roughness for different machining phases. Normally, the roughness is defined in the machining setting. The curve indicated by LimP1 is the calculated low limit values for roughing. The curves indicated by LimP2, LimP3, and LimP4 are the calculated low limit values for different semi-finishing processes. The curve indicated by LimP5 is the calculated low limit values for finishing. The low limit value is not only dependent on roughness requirements and machining phase but also dependent on the material of the electrode. The example shown in the figure 7 is for copper/steel electrode/part materials.

The high limit values is the low limit value times a coefficient, which depends on the machining phase.

**LIST OF REFERENCES**

1    electrode
2    final part
3    cavity

**Claims**

1.  A method for optimization of electrical discharge machining process for eroding a workpiece by an electrode (1) mounted in an electrical discharge machine tool, wherein a plurality of electrodes are required to form a plurality of cavities on the workpiece comprising the steps of:

    a. defining a target related to a machining priority, in particular the machining priority is selected from a group including at least one of the machining quality and machining time, ,
    b. obtaining cavity specification data defining the geometry of the cavity and the number of the cavities for calculating the material volume to be removed from the workpiece to form the cavities by a processing unit;
    c. obtaining at least one machining setting including machining parameters applied for machining the cavities by the processing unit;
    d. defining at least one machining sequence describing the order of machining the plurality of cavities;
    e. calculating cumulative wear of the electrode caused by machining the cavities based on the obtained cavity specification data, the obtained machining setting and the defined machining sequence by the processing unit; and
    f. determining the number of the electrodes required for machining the plurality of cavities based on the calculated cumulative wear of the electrode to reach the target by the processing unit.

2.  The method according to claim 1, wherein determining the cumulative wear for each cavity comprises:

    a. calculating the linear wear of electrode caused by machining one cavity; and
    b. calculating the cumulative wear by summing up the calculated linear wear of the electrode caused by machining multiple cavities, which are machined by the same electrode.

3.  The method according to claim 1 or 2, wherein the method further comprises comparing the cumulative wear with a limit and increasing the number of the electrode if the cumulative wear exceeds the limit.

4.  The method according to claim 3, wherein the limit is determined based on the target related to the machining priority.

5.  The method according to claim 3 or 4, wherein the limit comprises a low limit and a high limit.

6.  The method according to claim 5, wherein if the cumulative wear of one cavity exceed the high limit, the number of electrode is increased before calculating the wear of the next cavity.

7.  The method according to one of claims 1 to 6, wherein the method further comprising determining the machining time based on the cumulative wear, in particular a start point and end point of using each electrode is determined.

8.  The method according to one of claims 1 to 7, wherein the determined number of electrodes is transmitted to a machining process to prepare the electrodes needed.

9.  The method according to one of claims 1 to 8, wherein for each machining phase a defined type of electrode is applied and the number of the electrode of this type is determined.

10. A method for machining a part by EDM comprising:

> a. designing cavities and the electrode using a CAD by a first processing unit;
> b. calculating the number of electrode according to one of claims 1 to 8 by a second processing unit;
> c. receiving the calculated number of electrodes by a third processing unit;
> d. machining the electrodes by a first machine tool, in particular a milling machine tool;
> e. machining the part by applying the electrodes by a second machine tool, in particular an EDM machine tool.

11. A system for machining a part by EDM comprising:

> a. a first processing unit configured to design cavities and the electrodes using a CAD;
> b. a second processing unit configured to calculate the number of the electrode according to one of claims 1 to 9;
> c. a third processing unit configured to receive the calculated number of electrodes;
> d. a first machine tool configured to machine the electrodes; and
> e. a second machine tool configured to machine the part by applying the electrodes.

LimP1
LimP2
LimP3
LimP4
LimP5

roughness

Fig. 7

Low limit value [mm]

Fig. 1

**Fig. 2**

Initialization — S11

Wear by setting — S12

Cumulative wear — S13

S15
wear
≥
Limit High

TRUE

FALSE

S16
CHANGE electrode
applied for
NEXT CAVITY to machine
Tool Change =1

S17
wear
≥
Limit Low

TRUE

FALSE

S18
ADD one electrode
Applied to next calculating
of MACHINING PASS
Tool Add =1

S23
Next cavity

S20
ToolChange=1

FALSE

FALSE

S19
Machining step
completed

TRUE

FALSE

TRUE

Nbr electrodes = Nbr electrodes +1
Next calculation with
algorithm for new electrode
Tool Change = 0 Tool Add = 0

S22 TRUE

S21
If Tool Change=1
or
Tool Add =1

FALSE

Nbr electrodes defined — S24

Fig. 3

| cavity name | number of electrode | limit | machining sequence | WE |
|---|---|---|---|---|
| C1 | 1 | 0.2457 | 1 | 0.02664498 |
| C2 | 1 | 0.2457 | 2 | 0.05307175 |
| C3 | 1 | 0.2457 | 3 | 0.07928207 |
| C4 | 1 | 0.2457 | 4 | 0.10527774 |
| C5 | 1 | 0.2457 | 5 | 0.1310605 |
| C6 | 1 | 0.2457 | 6 | 0.15663209 |
| C7 | 1 | 0.2457 | 7 | 0.18199426 |
| C8 | 1 | 0.2457 | 8 | 0.20714871 |
| C9 | 1 | 0.2457 | 9 | 0.23209715 |
| C10 | 1 | 0.2457 | 10 | 0.25684126 |

Fig. 4a

| cavity name | number of electrode | limit | machining sequence | WE |
|---|---|---|---|---|
| C1 | 2 | 0.2457 | 10 | 0.0206586 |
| C2 | 2 | 0.2457 | 9 | 0.02038543 |
| C3 | 2 | 0.2457 | 8 | 0.01920691 |
| C4 | 2 | 0.2457 | 7 | 0.01760467 |
| C5 | 2 | 0.2457 | 6 | 0.01577454 |
| C6 | 2 | 0.2457 | 5 | 0.0137164 |
| C7 | 2 | 0.2457 | 4 | 0.0114301 |
| C8 | 2 | 0.2457 | 3 | 0.00891548 |
| C9 | 2 | 0.2457 | 2 | 0.00617239 |
| C10 | 2 | 0.2457 | 1 | 0.00320063 |

Fig. 4b

C1 — C2 — C3 … C10

machining step 1

machining step 2

**Fig. 5**

**Fig. 6a**

| cavity name | number of electrode | low limit | high limit | machining sequence | WE |
|---|---|---|---|---|---|
| C1 | 1 | 0.19215 | 0.399 | 1 | 0.06023554 |
| C2 | 1 | 0.19215 | 0.399 | 2 | 0.12012413 |
| C3 | 1 | 0.19215 | 0.399 | 3 | 0.17966775 |
| C4 | 1 | 0.19215 | 0.399 | 4 | 0.23886841 |
| C5 | 1 | 0.19215 | 0.399 | 5 | 0.29772807 |
| C6 | 1 | 0.19215 | 0.399 | 6 | 0.35624877 |
| C7 | 1 | 0.19215 | 0.399 | 7 | 0.41443225 |
| C8 | 2 | 0.19215 | 0.399 | 8 | 0.06023554 |
| C9 | 2 | 0.19215 | 0.399 | 9 | 0.12012413 |
| C10 | 2 | 0.19215 | 0.399 | 10 | 0.17966775 |

**Fig. 6b**

| cavity name | number of electrode | low limit | high limit | machining sequence | WE |
|---|---|---|---|---|---|
| C1 | 3 | 0.19215 | 0.399 | 10 | 0.03604454 |
| C2 | 3 | 0.19215 | 0.399 | 9 | 0.03534647 |
| C3 | 3 | 0.19215 | 0.399 | 8 | 0.03269794 |
| C4 | 3 | 0.19215 | 0.399 | 7 | 0.02887631 |
| C5 | 3 | 0.19215 | 0.399 | 6 | 0.02445684 |
| C6 | 3 | 0.19215 | 0.399 | 5 | 0.01955173 |
| C7 | 3 | 0.19215 | 0.399 | 4 | 0.01440148 |
| C8 | 3 | 0.19215 | 0.399 | 3 | 0.00893839 |
| C9 | 3 | 0.19215 | 0.399 | 2 | 0.00747722 |
| C10 | 3 | 0.19215 | 0.399 | 1 | 0.00409944 |

Europäisches
Patentamt

European
Patent Office

Office européen
des brevets

## EUROPEAN SEARCH REPORT

**Application Number**

EP 23 17 0517

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PHILIP BLEYS: "Electrical discharge milling: technology and tool wear compensation", ELECTRICAL DISCHARGE MILLING: TECHNOLOGY AND TOOL WEAR COMPENSATION, KATHOLIEKE UNIVERSITEIT, LEUVEN, BE, 1 December 2003 (2003-12-01), pages 1-406, XP008163328, | 1-9 | INV. G05B19/18 G05B19/404 |
| Y | * page 38, paragraph 2 * * page 38, paragraph 3 * ----- | 10,11 | |
| X | MEEUSEN WIM ET AL: "CAD tool for the design and manufacturing of freeform micro-EDM electrodes", LASER-BASED MICRO- AND NANOPACKAGING AND ASSEMBLY II, vol. 4755, 19 April 2002 (2002-04-19), pages 105-113, XP093092909, ISSN: 0277-786X, DOI: 10.1117/12.462800 * page 107, last paragraph * * page 107, paragraph 2 * * page 111, paragraph 1 * * page 110 * ----- | 1,9,10 | |
| Y | JP H07 271419 A (MITSUBISHI ELECTRIC CORP) 20 October 1995 (1995-10-20) * paragraph [0007] * * paragraph [0011] * ----- | 10,11 | TECHNICAL FIELDS SEARCHED (IPC) B23H G05B |
| A | JP 2012 176458 A (MITSUBISHI ELECTRIC CORP) 13 September 2012 (2012-09-13) * paragraph [0024] * * paragraphs [0062], [0063] * ----- | 1,10,11 | |

-/--

The present search report has been drawn up for all claims

| Place of search | Date of completion of the search | Examiner |
|---|---|---|
| The Hague | 23 October 2023 | Jaeger, Hein |

EPO FORM 1503 03.82 (P04C01)

Europäisches
Patentamt

European
Patent Office

Office européen
des brevets

# EUROPEAN SEARCH REPORT

Application Number

EP 23 17 0517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAHAJAN K R ET AL: "KNOWLEDGE BASED DESIGN OF EDM ELECTRODES FOR MOULD CAVITIES PRE-MACHINED BY HIGH-SPEED MILLING", JOURNAL OF MATERIALS PROCESSING TECHNOLOGY, ELSEVIER, NL, vol. 149, no. 1-3, 13 April 2004 (2004-04-13), pages 71-76, XP002457584, ISSN: 0924-0136, DOI: 10.1016/J.JMATPROTEC.2004.02.007 * Conclusions; page 7 * | 1,10,11 | |
| A | DE 198 56 116 A1 (AGIE SA [CH]) 15 June 2000 (2000-06-15) * column 4, lines 41-61 * * column 6, line 67 - column 7, line 2 * * claims 6-8 * | 1 | |
| A | US 2020/198038 A1 (CHAPATTE CHRISTIAN [CH] ET AL) 25 June 2020 (2020-06-25) * paragraph [0031] * | 10,11 | TECHNICAL FIELDS SEARCHED (IPC) |

The present search report has been drawn up for all claims

| Place of search | Date of completion of the search | Examiner |
|---|---|---|
| The Hague | 23 October 2023 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 17 0517**

This annex lists the patent family members relating to the patent documents cited in  the above-mentioned European search report.
The members are as contained in the European Patent Office EDP file on
The European Patent Office is in no way liable for these particulars which are merely given for the purpose of information.

23-10-2023

| Patent document cited in search report | | Publication date | Patent family member(s) | | Publication date |
|---|---|---|---|---|---|
| JP H07271419 | A | 20-10-1995 | JP | 3564721 B2 | 15-09-2004 |
| | | | JP | H07271419 A | 20-10-1995 |
| JP 2012176458 | A | 13-09-2012 | NONE | | |
| DE 19856116 | A1 | 15-06-2000 | DE | 19856116 A1 | 15-06-2000 |
| | | | US | 6556886 B1 | 29-04-2003 |
| US 2020198038 | A1 | 25-06-2020 | CN | 111347109 A | 30-06-2020 |
| | | | EP | 3670053 A1 | 24-06-2020 |
| | | | US | 2020198038 A1 | 25-06-2020 |

EPO FORM P0459

For more details about this annex : see Official Journal of the European Patent Office, No. 12/82

**REFERENCES CITED IN THE DESCRIPTION**

**Patent documents cited in the description**

- US 6521856 B